# FASCICULE DE BREVET EUROPEEN

(11) **EP 3 267 092 B1**
(45) Date de publication et mention de la délivrance du brevet: **09.10.2019**
(21) Numéro de dépôt: 17305584.9
(22) Date de dépôt: 19.05.2017
(51) Int. Cl.: F17C 13/06

(54) **ENSEMBLE DE DISTRIBUTION DE GAZ COMPRENANT UN CAPOTAGE AGENCÉ AUTOUR D'UN BLOC ROBINET ÉQUIPANT UN RÉCIPIENT DE GAZ**
GASVERTEILUNGSANLAGE, DIE EINE UM EINEN ABSPERRHAHNBLOCK ANGEORDNETE VERKLEIDUNG UMFASST, MIT DER EIN GASBEHÄLTER AUSGESTATTET WIRD
GAS DISTRIBUTION ASSEMBLY COMPRISING A VISOR ARRANGED AROUND A VALVE BLOCK PROVIDED IN A GAS CONTAINER

(30) Priorité: 21.06.2016 FR 1655748
(43) Date de publication de la demande: 10.01.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: FRENAL, Antoine, 95460 Ezanvilles (FR); LIGONESCHE, Renaud, 95220 Herblay (FR)
(74) Mandataire: Pittis, Olivier

(56) Documents cités:
- EP-A1- 2 116 332
- WO-A1-2007/048952
- WO-A1-2014/053372
- US-A- 5 058 758

## Description

La présente invention concerne un récipient de gaz équipé d'un ensemble de distribution de gaz comprenant un capotage de protection agencé autour d'un bloc robinet, la paroi interne du capotage comprenant des « doigts » en saillie venant se positionner dans des trous borgnes pratiqués dans le corps du bloc robinet pour permettre de positionner correctement le capotage par rapport au bloc robinet, telle une bouteille de gaz, en particulier de gaz médical.

Les gaz industriels et médicaux sont conditionnés dans des récipients de gaz, typiquement des bouteilles ou bonbonnes de gaz, équipés d'un bloc robinet, avec ou sans détendeur intégré, à savoir un robinet simple de type ouvert/fermé ou un robinet à détendeur intégré, encore appelé RDI, permettant de contrôler débit et pression du gaz délivré.

Afin de protéger ce bloc robinet, plus simplement appelé « robinet », il est courant agencer au niveau du col de la bouteille de gaz et autour du robinet, un capotage de protection formant coque protectrice autour du robinet.

Les capotages sont aussi appelés « chapeaux », « coques » ou même « capuchon ».

Des exemples de tels capotages équipant des récipients de gaz sont décrits par les documents EP-A-629812, DE-A-10057469, US-A-2004/020793, EP-A-2586481, EP-A-2918893 et WO-A-2015/132092. Par exemple, le document US-A-5,058,758 propose un récipient de gaz muni d'une vanne de distribution de gaz équipée d'un manomètre et protégée par un capotage de protection qui est fixé autour de la vanne et du manomètre de manière à les protéger contre les chocs éventuels.

Lors du montage d'un capotage sur un bloc robinet équipant un récipient de gaz, il n'est pas toujours aisé de positionner correctement le capotage par rapport au bloc robinet. Or, un mauvais positionnement de ces éléments engendre des risques de rotation intempestive du capotage sur le bloc robinet et/ou la présence de jeux non maitrisés et non souhaitables car pouvant gêner ou empêcher une utilisation normale de l'ensemble de distribution de gaz, par exemple des difficultés à y raccorder une prise de remplissage ou de permettre la mobilité de certains organes de contrôle, par exemple volant, boutons...

Au vu de cela, le problème qui se pose est de proposer un récipient de gaz équipé d'un ensemble de distribution de gaz comprenant un capotage de protection ou « chapeau » et un bloc robinet, avec ou sans détendeur intégré, qui soit amélioré, en particulier qui permette un positionnement aisé et correct du capotage sur le bloc robinet, lors de son montage sur le bloc robinet, en particulier une bouteille de gaz.

La solution de l'invention est un récipient de gaz, en particulier une bouteille de gaz, équipé d'un ensemble de distribution de gaz comprenant un bloc robinet et un capotage de protection, ou « chapeau », agencé autour dudit bloc robinet, le capotage de protection comprenant un corps de capotage formant coque protectrice délimitant un volume interne conçu pour recevoir tout ou partie du bloc robinet, caractérisé en ce que :
- le bloc robinet comprend au moins un trou borgne débouchant sur sa surface périphérique externe, et
- le corps de capotage porte sur sa paroi interne au moins un doigt en saillie se projetant dans ledit volume interne, ledit au moins un doigt en saillie venant se loger dans ledit au moins un trou borgne lorsque le capotage de protection est agencé autour du bloc robinet de manière à assurer un bon positionnement, c'est-à-dire aisé et correct, du capotage de protection par rapport au bloc robinet.

Selon le cas, le récipient de gaz équipé d'un l'ensemble de distribution de gaz selon l'invention peut comprendre l'une ou plusieurs des caractéristiques techniques suivantes :
- le corps de capotage comprend plusieurs doigts en saillie se projetant dans le volume interne.
- le bloc robinet comprend plusieurs trous borgnes débouchant sur sa surface périphérique externe, et dans lesquels viennent se loger plusieurs doigts en saillie du corps de capotage.
- le bloc robinet est en métal ou en alliage métallique, de préférence en laiton ou en acier inoxydable, ou une combinaison des deux.
- ledit au moins un doigt en saillie est solidaire de la paroi interne du corps de capotage, c'est-à-dire de la paroi située du côté du volume interne du capotage.
- au moins un doigt en saillie et qu'au moins une partie du corps de capotage sont moulés d'une pièce.
- au moins un doigt en saillie et qu'au moins une partie du corps de capotage sont en matériau plastique ou métallique, ou les deux.
- le corps de capotage comprend au moins deux demi-coques solidarisées l'une à l'autre. Les demi-coques peuvent être solidarisées selon un plan vertical, horizontal, oblique ou autre. De même, elles peuvent être symétriques ou non.
- au moins l'une des demi-coques porte au moins un doigt en saillie, c'est-à-dire sur sa paroi interne.
- le capotage comprend, en outre, sur sa surface interne, une ou plusieurs expansions de parois supplémentaires venant prendre appui sur la surface périphérique du bloc robinet et/ou au moins deux expansions de parois supplémentaires venant s'emboiter l'une dans l'autre, de préférence formant une connexion mâle/femelle.
- le capotage comprend préférentiellement plusieurs expansions de parois supplémentaires venant prendre appui sur la surface périphérique du bloc robinet et au moins deux expansions de parois supplémentaires venant s'emboiter l'une dans l'autre.
- le corps de capotage est en polymère ou métallique, ou les deux.
- le corps de capotage comprend au moins deux demi-coques solidarisées l'une à l'autre.
- le corps de capotage comprend deux demi-coques solidarisées l'une à l'autre selon un plan vertical, horizontal, oblique ou autre.
- le corps de capotage comprend au moins deux demi-coques, avantageusement symétriques, venant prendre le bloc robinet en « sandwich ».
- le corps de capotage comprend au moins deux demi-coques fixées l'une à l'autre par des éléments vissés, tels des vis, des boulons...
- le corps de capotage comprend un dispositif d'accrochage pivotant entre plusieurs positions angulaires comprenant une position de repos dans laquelle le dispositif d'accrochage est replié au contact ou quasi contact du corps de capotage, et une position d'accrochage dans laquelle le dispositif d'accrochage est déplié.
- le dispositif d'accrochage comporte deux bras s'étendant latéralement de part et d'autre du corps de capotage.
- le corps de capotage porte au moins une butée faisant saillie en éloignement par rapport à la surface externe dudit corps de capotage et sur laquelle le dispositif d'accrochage vient buter lorsqu'il est dans sa position de repos.
- la butée est agencée sur le corps de capotage et est traversée par un moyen de fixation, notamment de fixation par bridage (colliers, clips,...) ou par vissage, de préférence une vis, un boulon ou analogue.
- le dispositif d'accrochage est fixé au corps de capotage de manière pivotante autour d'un axe AA, de préférence situé sur la face arrière du corps du capotage.
- le dispositif d'accrochage comprend une structure tridimensionnelle, de préférence elle a une forme générale incurvée.
- un système de blocage permet de bloquer et maintenir le dispositif d'accrochage en position de repos.
- le dispositif d'accrochage pivote entre la position de repos et la position d'accrochage d'un angle (a) inférieur à 180°, typiquement compris entre 90° et 170°, de préférence d'au moins 110°.
- le corps de capotage comprend au moins un montant-support solidaire dudit corps de capotage et supportant une poignée de portage.
- le dispositif d'accrochage est formé de matériau polymère ou métallique, ou les deux.
- le corps du capotage et/ou le dispositif d'accrochage sont en un matériau polymère de type PVC, PE, PET, PP, PMMA, PU, PA ou métallique, par exemple en fonte d'acier, en aluminium ou en un alliage d'aluminium.
- le dispositif d'accrochage comprend deux bras s'étendant de part et d'autre du capotage, c'est-à-dire vers la droite et la gauche du capotage, de manière à le ceinturer partiellement.
- le dispositif d'accrochage est formé d'une seule pièce, notamment par moulage.
- le dispositif d'accrochage comprend une ouverture centrale venant se positionner en regard du raccord de remplissage lorsque le dispositif d'accrochage est en position de repos.
- le capotage comprend en outre un volant rotatif de contrôle de la sortie de gaz et un raccord de sortie de gaz.
- le capotage comprend en outre un manomètre servant à indiquer la pression du gaz dans la bouteille équipée du capotage.
- le bloc robinet est de type avec ou sans détendeur intégré.
- le bloc robinet est de type à détendeur intégré (RDI), c'est-à-dire qu'il incorpore un système de détente de gaz avec clapet, siège de clapet...
- le récipient de gaz est choisi parmi les bouteilles ou bonbonnes de gaz.
- le récipient de gaz est une bouteille de gaz ayant une taille comprise entre 10 et 150 cm.
- le récipient de gaz est une bouteille de gaz contenant de 0,5 à 20 litres (contenance en équivalent eau) ou toute autre contenance.
- le récipient de gaz est une bouteille de gaz de corps cylindrique creux.
- le récipient de gaz est une bouteille de gaz comprenant un col portant un orifice de sortie du gaz.
- le bloc robinet est fixé au niveau de l'orifice de sortie du gaz de manière à assurer une continuité fluidique.
- le capotage est fixé au col du récipient de gaz.
- le récipient de gaz est une bouteille de gaz contenant un gaz ou mélange gazeux choisi parmi l'oxygène, l'air, un mélange N₂O/O₂, un mélange He/O₂, un mélange NO/azote ou tout autre gaz ou mélange gazeux.
- la bouteille est en acier, en un alliage d'aluminium ou en matériau composite.
- la bouteille contient un gaz à une pression allant jusqu'à 350 bar environ.

L'invention concerne aussi une utilisation d'un récipient de gaz selon l'invention pour distribuer un gaz ou mélange gazeux, en particulier un gaz ou mélange gazeux est choisi parmi l'oxygène, air, N₂O/O₂, He/O₂ et NO/azote.

L'invention va maintenant être mieux comprise grâce à la description détaillée suivante, faite à titre illustratif mais non limitatif, en référence aux figures annexées parmi lesquelles :
- la Figure 1 représente un mode de réalisation d'un récipient de gaz muni d'un ensemble de distribution de gaz selon l'invention, et
- les Figures 2 à 6 illustrent l'architecture du capotage et du robinet d'un ensemble de distribution de gaz selon l'invention.

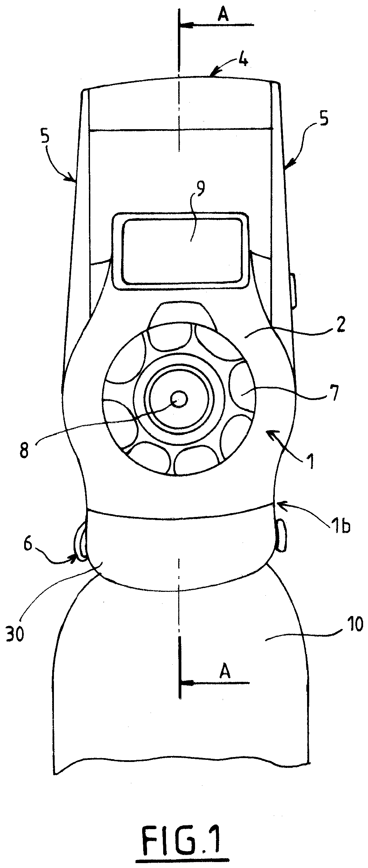

La Figure 1 représente un mode de réalisation d'un récipient de gaz 10 selon l'invention comprenant un ensemble de distribution de gaz comprenant un capotage de protection 1 rigide, couramment appelé « chapeau », agencé autour d'un bloc robinet 3, lui-même fixé sur le col du récipient de gaz 10, à savoir ici une bouteille de gaz de corps cylindrique.

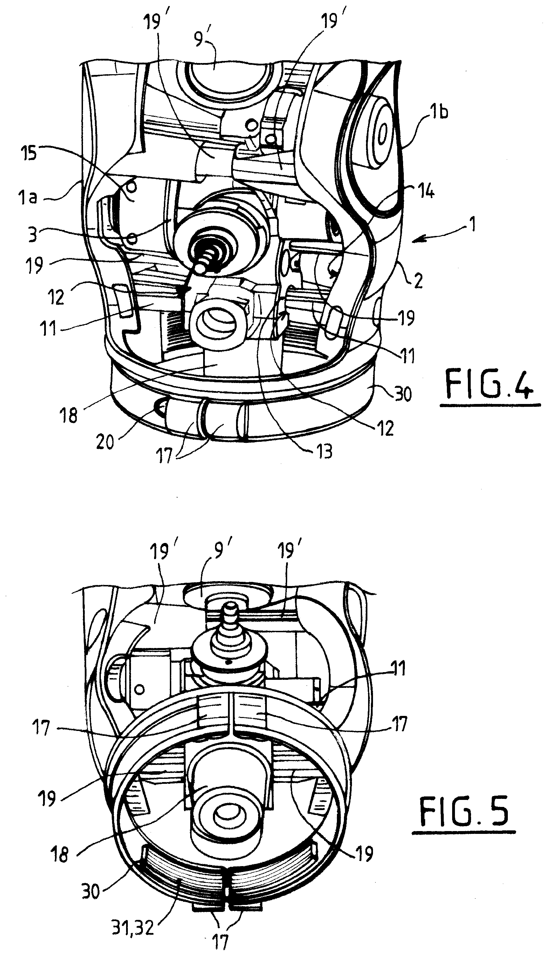

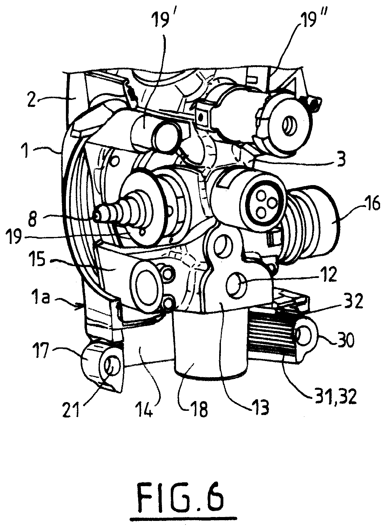

Le bloc robinet 3 vient se fixer sur le col du récipient 10 via un embout fileté 18, typiquement de forme tronconique ou cylindrique, comme illustré sur les Figures 4 à 6.

Le bloc robinet 3 est en métal ou alliage métallique, typiquement laiton ou en acier inoxydable, ou les deux.

La bouteille de gaz 10 a typiquement une taille entre 10 et 150 cm, et une contenance de 0,5 à 20 litres (en équivalent eau) ou autre. Le capotage de protection 1 sert à protéger le bloc robinet 3 contre les chocs, que le bloc robinet 3 soit du type avec détendeur de gaz intégré ou RDI, ou du type sans détendeur intégré.

Le capotage de protection 1 comprend un corps 2 de capotage formant une coque protectrice rigide autour d'un volume interne 15 dimensionné pour recevoir le bloc robinet 3, une poignée de portage 4 conçue pour être prise en main par un opérateur, ladite poignée de portage 4 étant formée d'un matériau rigide, et portée par un ou plusieurs montants-supports 5, ici deux montants supports 5 agencés en parallèle, reliant mécaniquement le corps 2 de capotage à la poignée de portage 4, c'est-à-dire que les montants-supports 5 sont solidarisés à la poignée de portage 4 de manière à permettre à un utilisateur de transporter facilement l'ensemble chapeau 1/robinet 3/bouteille 10.

Le corps 2 du capotage 1 est typiquement en un matériau de type polymère et/ou métal, préférentiellement en matériau plastique, tel que PVC, PE, PET, PP, PMMA, PU, PA... De même, les montants-supports 5 peuvent être formés d'un matériau plastique, comme le corps du capotage 1, mais aussi en alliage d'aluminium ou tout autre matériau métallique.

Le bloc robinet 3, typiquement de type RDI, comprend un volant rotatif 7, situé en face avant du capotage 2, manipulable par un utilisateur pour contrôler le débit de gaz, un raccord de sortie de gaz 8 pour soutirer le gaz stocké dans la bouteille 10, et un raccord de sortie de gaz sous pression.

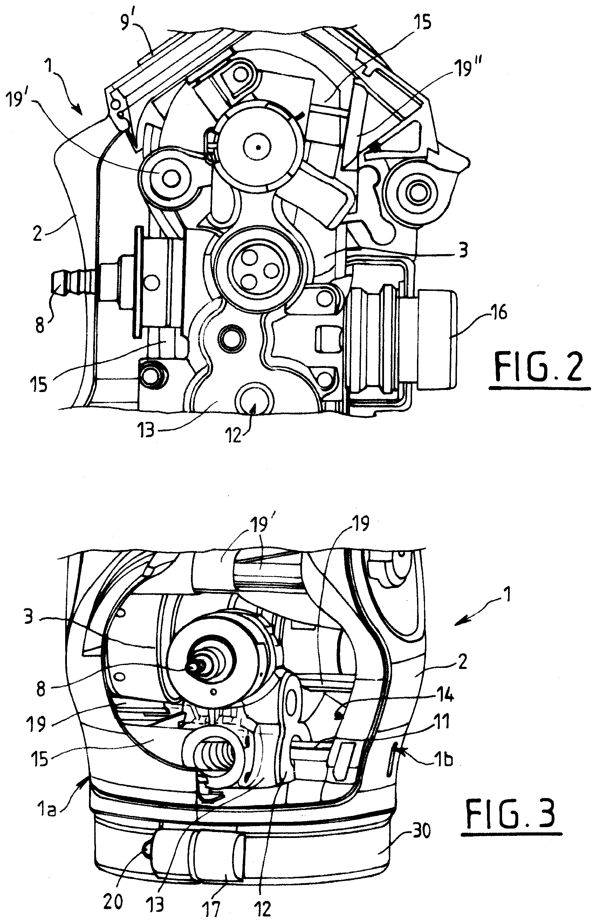

Comme illustré sur les Figures 2 à 6, le robinet 3 comprend également un raccord de remplissage 16, situé en face arrière du capotage 2, servant à introduire du gaz dans la bouteille 10 lorsque celle-ci est vide.

Selon le mode de réalisation choisi, l'ensemble de l'invention peut aussi comprendre un écran de visualisation 9 (Fig. 1) digital, par exemple un écran tactile, ou un manomètre 9' à aiguille (Fig. 2, 4 et 5) pour visualiser et/ou contrôler la pression du gaz ou d'autres informations utiles, par exemple une durée d'autonomie en gaz de la bouteille 10 ou un type de gaz.

L'assemblage du capotage de protection 1 et sa fixation autour du bloc de robinet ou du col de la bouteille de gaz 10, se fait à l'aide d'éléments de fixation 17, notamment des vis 20, des boulons ou analogues, venant se visser dans des logements 21 adaptés, comme illustré en Figures 3 à 6.

De préférence, le corps 2 du capotage de protection 1 est formé d'au moins deux demi-coques 1a, 1b venant se solidariser l'une à l'autre, selon un plan de jonction par exemple un plan vertical, horizontal ou oblique. Les deux demi-coques viennent alors prendre le robinet 3 et le col du récipient 10 en sandwich de manière à contenir le bloc robinet 3 dans leur espace ou volume interne 15.

De préférence, la base du corps 2 du capotage de protection 1 comprend une collerette 30 venant enserrer le col de la bouteille 10. Comme schématisé en Figures 5, afin d'améliorer la préhension, la collerette 30 peut comprendre des profils tridimensionnels 32, par exemple des rainures parallèles les unes ou autres (droites ou courbes) ou hélicoïdales, s'étendant sur tout ou partie de la périphérie interne de la surface interne 31 de la collerette 30 formant l'embase du capotage 1.

Afin de permettre l'accroche de l'ensemble bouteille 10/bloc robinet 3/capotage 1 à un support, tel un barreau de lit d'hôpital ou de brancard, le capotage 1 peut comprendre, du côté de sa face arrière, un dispositif d'accrochage 6 pivotant autour d'un axe AA, entre une position totalement repliée, dite de repos, c'est-à-dire adoptée par le dispositif d'accrochage 6 lorsqu'il est rangé et positionné en contact ou quasi-contact du corps 2 du capotage 1, comme schématisé en Figure 1, et une position totalement dépliée, dite d'accrochage ou active, c'est-à-dire adoptée par le dispositif 6 lorsqu'il est complètement sorti et peut être accroché à un support, tel un barreau de lit ou analogue.

Par ailleurs, afin d'assurer un bon positionnement du capotage 1 de protection par rapport au bloc robinet 3, selon la présente invention, on prévoit un ou plusieurs trous borgnes 12 débouchant sur sa surface périphérique 13 externe du bloc robinet 3 coopérant avec des doigts en saillie 11 rigides, portés par la paroi intérieure 14 du corps 2 du capotage 1, lesquels doigts 11 se projettent radialement dans le volume interne 15, c'est-à-dire en direction du robinet 3, et viennent se loger dans un ou des trous borgnes 12 du bloc robinet 3, lorsque le capotage 1 est agencé autour du bloc robinet 3.

En d'autres termes, l'extrémité libre des doigts 11 est introduite dans les trous borgnes 12 du corps de robinet 3 de manière à opérer un bon indexage, c'est-à-dire un positionnement correct, du capotage 1 par rapport au bloc robinet 3.

Les doigts en saillie 11 sont préférentiellement des expansions radiales de la paroi interne 14 du corps 2 du capotage 1, et sont formés d'une seule pièce avec la paroi interne 14, par exemple par moulage.

Les doigts en saillie 11 ont une forme allongée. Ils sont réalisés en un matériau rigide, de préférence en plastique. Préférentiellement, la première demi-coque la comprend au moins un doigt en saillie 11, et la seconde demi-coque 1b comprend également au moins un doigt en saillie 11.

En outre, des trous borgnes 12 sont aménagés avantageusement dans la partie basse du robinet 3, c'est-à-dire dans la moitié inférieure ou portion basse du bloc robinet 3, pour permettre d'indexer de manière plus efficace le chapeau 1, c'est-à-dire de guider les demi-coques la, 1b lors de leur montage en y logeant des doigts 11 portés par les demi-coques la, 1b, c'est-à-dire en pigeant le chapeau 1 par rapport au robinet 3. Les doigts 11 interdisent donc toute rotation intempestive ou "gite" excessif du capotage 1 par rapport au bloc robinet 3.

Comme illustré sur les Figures 3 à 6, le capotage 1 peut être doté, sur sa surface interne 14, d'expansions de parois supplémentaires 19, 19', 19" de préférence en partie haute, renforçant l'appui et la maitrise parfaite des jeux entre robinet 3 et capotage 1, et par ailleurs interdisant toute rotation intempestive du capotage 1 autour du robinet 3.

Dans ce cas, les expansions de parois supplémentaires 19 peuvent venir prendre appui sur la surface périphérique du bloc robinet 3 et/ou deux expansions de parois supplémentaires 19'et 19" peuvent venir coopérer l'une avec l'autre, par exemple s'emboiter l'une dans l'autre, comme illustré en Figures 3-6, telle une connexion mâle/femelle.

Ces expansions de parois supplémentaires 19, 19'et 19" sont solidaires de la paroi 14 interne du capotage 1, préférentiellement formées d'une pièce avec la paroi interne 14 du capotage 1, en particulier les deux demi-coques 1a, 1b, en particulier obtenues par moulage d'une pièce. De ce fait, elles sont avantageusement réalisées en matériau plastique ou métallique.

L'invention est particulièrement bien adaptée au stockage et à la distribution de gaz médicaux.

## Revendications

1. Récipient de gaz (10) équipé d'un ensemble de distribution de gaz comprenant un bloc robinet (3) et un capotage de protection (1) agencé autour du bloc robinet (3), le capotage de protection comprenant un corps (2) de capotage formant coque protectrice délimitant un volume interne (15) conçu pour recevoir tout ou partie du bloc robinet (3), **caractérisé en ce que** :
- le bloc robinet (3) comprend au moins un trou borgne (12) débouchant sur sa surface périphérique (13) externe, et
- le corps (2) de capotage comprend sur sa paroi interne (14) au moins un doigt en saillie (11) se projetant dans ledit volume interne (15), ledit au moins un doigt en saillie (11) venant se loger dans ledit au moins un trou borgne (12) lorsque le capotage de protection (1) est agencé autour du bloc robinet (3).

2. Récipient de gaz selon la revendication précédente, **caractérisé en ce que** le corps (2) de capotage comprend plusieurs doigts en saillie (11) se projetant dans le volume interne (15).

3. Récipient de gaz selon l'une des revendications précédentes, **caractérisé en ce que** le bloc robinet (3) comprend plusieurs trous borgnes (12) débouchant sur sa surface périphérique (13) externe, et dans lesquels viennent se loger plusieurs doigts en saillie (11) du corps (2) de capotage.

4. Récipient de gaz selon l'une des revendications précédentes, **caractérisé en ce que** ledit au moins un doigt en saillie (11) est solidaire de la paroi interne (14) du corps (2) de capotage.

5. Récipient de gaz selon l'une des revendications précédentes, **caractérisé en ce qu'**au moins un doigt en saillie (11) et qu'au moins une partie du corps (2) de capotage sont moulés d'une pièce.

6. Récipient de gaz selon l'une des revendications précédentes, **caractérisé en ce qu'**au moins un doigt en saillie (11) et qu'au moins une partie du corps (2) de capotage sont en matériau plastique.

7. Récipient de gaz selon l'une des revendications précédentes, **caractérisé en ce que** le corps (2) de capotage comprend au moins deux demi-coques (1a, 1b) solidarisées l'une à l'autre.

8. Récipient de gaz selon la revendication 7, **caractérisé en ce qu'**au moins l'une des demi-coques (1a, 1b) porte au moins un doigt en saillie (11).

9. Récipient de gaz selon l'une des revendications précédentes, **caractérisé en ce que** le capotage (1) comprend, en outre, sur sa surface interne (14), une ou plusieurs expansions de parois supplémentaires (19, 19', 19") venant prendre appui sur la surface périphérique du bloc robinet (3) ou au moins deux expansions de parois supplémentaires (19', 19") venant s'emboiter l'une dans l'autre, de préférence formant une connexion mâle/femelle.

10. Récipient de gaz (10) selon l'une des revendications précédentes, **caractérisé en ce qu'**il est une bouteille de gaz.

11. Utilisation d'un récipient de gaz selon l'une des revendications précédentes pour stocker ou distribuer un gaz ou mélange gazeux, de préférence le gaz ou mélange gazeux est choisi parmi l'oxygène, air, N₂O/O₂, He/O₂ et NO/azote.

## Patentansprüche

1. Gasbehälter (10), der mit einer Gasabgabeanordnung ausgestattet ist, die einen Ventilblock (3) und eine rund um den Ventilblock (3) angeordnete Schutzkappe (1) umfasst, wobei die Schutzkappe einen Kappenkörper (2) umfasst, der eine Schutzhülle bildet, die ein Innenvolumen (15) begrenzt, das zur Aufnahme des gesamten oder eines Teils des Ventilblocks (3) konzipiert ist, **dadurch gekennzeichnet, dass**:
- der Ventilblock (3) mindestens ein Sackloch (12) umfasst, das in seine äußere Umfangsfläche (13) mündet, und
- der Kappenkörper (2) auf seiner Innenwand (14) mindestens einen vorspringenden Finger (11) umfasst, der in das Innenvolumen (15) ragt, wobei der mindestens eine vorspringende Finger (11) in das mindestens eine Sackloch (12) einführbar ist, wenn die Schutzkappe (1) rund um den Ventilblock (3) angeordnet ist.

2. Gasbehälter nach dem vorstehenden Anspruch, **dadurch gekennzeichnet, dass** der Kappenkörper (2) mehrere vorspringende Finger (11) umfasst, die in das Innenvolumen (15) ragen.

3. Gasbehälter nach einem der vorstehenden Ansprüche, **dadurch gekennzeichnet, dass** der Ventilblock (3) mehrere Sacklöcher (12) umfasst, die in seine äußere Umfangsfläche (13) münden und in die mehrere vorspringenden Finger (11) des Kappenkörpers (2) einführbar sind.

4. Gasbehälter nach einem der vorstehenden Ansprüche, **dadurch gekennzeichnet, dass** der mindestens eine vorspringende Finger (11) mit der Innenwand (14) des Kappenkörpers (2) fest verbunden ist.

5. Gasbehälter nach einem der vorstehenden Ansprüche, **dadurch gekennzeichnet, dass** mindestens ein vorspringender Finger (11) und mindestens ein Teil des Kappenkörpers (2) einstückig geformt sind.

6. Gasbehälter nach einem der vorstehenden Ansprüche, **dadurch gekennzeichnet, dass** mindestens ein vorspringender Finger (11) und mindestens ein Teil des Kappenkörpers (2) aus einem Kunststoffmaterial bestehen.

7. Gasbehälter nach einem der vorstehenden Ansprüche, **dadurch gekennzeichnet, dass** der Kappenkörper (2) mindestens zwei fest miteinander verbundene Halbschalen (1a, 1b) umfasst.

8. Gasbehälter nach Anspruch 7, **dadurch gekennzeichnet, dass** mindestens eine der Halbschalen (1a, 1b) mindestens einen vorspringenden Finger (11) trägt.

9. Gasbehälter nach einem der vorstehenden Ansprüche, **dadurch gekennzeichnet, dass** die Kappe (1) weiter auf ihrer Innenfläche (14) eine oder mehrere Erweiterungen von zusätzlichen Wänden (19, 19', 19"), die auf der Umfangsfläche des Ventilblocks (3) aufliegen, oder mindestens zwei Erweiterungen von zusätzlichen Wänden (19', 19") umfasst, die ineinandergreifen, wobei sie vorzugsweise eine Stecker-Buchsen-Verbindung bilden.

10. Gasbehälter (10) nach einem der vorstehenden Ansprüche, **dadurch gekennzeichnet, dass** es sich dabei um eine Gasflasche handelt.

11. Verwendung eines Gasbehälters nach einem der vorstehenden Ansprüche zur Speicherung oder Abgabe eines Gases oder eines Gasgemisches, wobei das Gas oder Gasgemisch vorzugsweise aus Sauerstoff, Luft, N₂O/O₂, He/O₂ und NO/Stickstoff ausgewählt ist.

## Claims

1. Gas container (10) equipped with a gas distribution assembly comprising a tap unit (3) and a protective cap (1) arranged around the tap unit (3), the protective cap comprising a cap body (2) forming a protective shell delimiting an inner volume (15) designed to receive all or some of the tap unit (3), **characterised in that**:
- the tap unit (3) comprises at least one blind slot (12) opening onto the outer peripheral surface (13) thereof, and
- the cap body (2) comprises, on the inner wall (14) thereof, at least one protruding finger (11) being projected into said inner volume (15), said at least one protruding finger (11) being housed in said at least one blind slot (12) when the protective cap (1) is arranged around the tap unit (3).

2. Gas container according to the preceding claim, **characterised in that** the cap body (2) comprises several protruding fingers (11) being projected into the inner volume (15).

3. Gas container according to one of the preceding claims, **characterised in that** the tap unit (3) comprises several blind slots (12) opening onto the outer peripheral surface (13) thereof, and wherein are housed several fingers (11) protruding from the cap body (2).

4. Gas container according to one of the preceding claims, **characterised in that** said at least one protruding finger (11) is integral with the inner wall (14) of the cap body (2).

5. Gas container according to one of the preceding claims, **characterised in that** at least one protruding finger (11) and that at least some of the cap body (2) are moulded from one part.

6. Gas container according to one of the preceding claims, **characterised in that** at least one protruding finger (11) and that at least some of the cap body (2) are made of plastic material.

7. Gas container according to one of the preceding claims, **characterised in that** the cap body (2) comprises at least two half-shells (1a, 1b) integral with one another.

8. Gas container according to claim 7, **characterised in that** at least one of the half-shells (1a, 1b) carries at least one protruding finger (11).

9. Gas container according to one of the preceding claims, **characterised in that** the cap (1) further comprises, on the inner surface (14) thereof, one or more expansions of additional walls (19, 19', 19") bearing against the peripheral surface of the tap unit (3) or at least two expansions of additional walls (19', 19") being interlocked in one another, preferably forming a male/female connection.

10. Gas container (10) according to one of the preceding claims, **characterised in that** it is a gas cylinder.

11. Use of a gas container according to one of the preceding claims for storing or distributing a gas or gaseous mixture, preferably the gas or gaseous mixture is selected from among oxygen, air, N₂O/O₂, He/O₂ and NO/nitrogen.
